# EUROPÄISCHE PATENTANMELDUNG

(11) **EP 0 977 409 A2**
(43) Veröffentlichungstag der Anmeldung: **02.02.2000**
(21) Anmeldenummer: 99113782.9
(22) Anmeldetag: 14.07.1999
(51) Int. Cl.: H04L 25/20

(54) **Repeater mit Kurzschlusserkennung**

(30) Priorität: 27.07.1998 DE 19833729
(71) Anmelder: SIEMENS AKTIENGESELLSCHAFT, 80333 München (DE)
(72) Erfinder: Aumer, Albert, Dipl.-Ing., 92260 Ammerthal (DE); Häbel, Bernd, Dipl.-Ing., 92263 Ebermannsdorf (DE)

(57) **Zusammenfassung**

Repeater (R) zur Verbindung eines ersten Bussegmentes eines Bussystems, insbesondere eines Feldbussystems, mit mindestens einem weiteren Segment dieses Bussystems, wobei der Repeater Mittel zur Erkennung des Signalzustandes am Bussystem, einen Zähler und Mittel zur Abtrennung angeschlossener Bussegmente aufweist, wobei der Zähler beim Beginn einer Datenübertragung gestartet wird und der Zähler bei einer Signalsituation am Bus, die nicht eintreten kann, sofern eine Kurzschlußsituation am Bus vorliegt, zurückgesetzt wird, wobei ferner ein Grenzwert (GW) für den Zähler vorgebbar ist, wobei der Grenzwert (GW) bei normalen Datenübertragungen nicht erreicht wird und wobei der Zähler den Grenzwert (GW) nur im Falle einer Kurzschlußsituation erreicht oder überschreitet.

## Beschreibung

Die vorliegende Erfindung bezieht sich auf einen Repeater mit einer Kurzschlußerkennung. Ein Repeater ist ein in einem Bus eingesetztes Gerät zur Signalauffrischung, das damit den Anschluß weiterer Teilnehmer hinter einer ersten oder vorangehenden Gruppe von Teilnehmern ermöglicht.

Geräte, die bei der Automatisierung industrieller Prozesse Anwendung finden, z.B. digitale Ein-/Ausgabebaugruppen für das Automatisierungssystem SIMATIC der Siemens Aktiengesellschaft, weisen auf der Peripherieseite eine Kurzschlußerkennung auf. Bei Geräten dieser Art erfolgt eine Kurzschlußerkennung, indem Grenzwerte für Ströme oder Spannungen überwacht werden, oder indem z.B. die Erwärmung eines dafür vorgesehenen Bauteils über einen vorgebbaren Grenzwert überwacht wird und bei Überschreiten des Grenzwerts auf Kurzschluß erkannt wird und die geeigneten Maßnahmen eingeleitet werden.

Analog dazu sind z.B. Baugruppen mit einem Widerstand bekannt, über den bei Kurzschluß ein erhöhter Strom fließt, was entsprechend zu einem erhöhten Spannungsabfall an dem Widerstand führt, wobei dieser Spannungsabfall überwacht wird und bei Überschreiten eines Grenzwertes für den Spannungsabfall an diesem Widerstand auf Kurzschluß erkannt wird und entsprechend die Maßnahmen eingeleitet werden.

Nicht bekannt ist hingegen eine Kurzschlußerkennung bei Baugruppen zur Automatisierung industrieller Prozesse auf der Busseite. Die Aufgabe der vorliegenden Erfindung besteht folglich darin, ein Gerät zur Automatisierung industrieller Prozesse anzugeben, mit dem die negativen Auswirkungen bei einem Kurzschluß auf dem Bussystem auf das Bussystem insgesamt vermieden werden.

Diese Aufgabe wird durch einen Repeater zur Verbindung eines ersten Bussegmentes eines Bussystems, insbesondere eines Feldbussystems, mit mindestens einem weiteren Segment dieses Bussystems, wobei der Repeater Mittel zur Erkennung des Signalzustandes am Bussystem und Mittel zur Abtrennung der angeschlossenen Bussegmente aufweist, dadurch gelöst, daß ein Zähler beim Beginn einer Datenübertragung gestartet wird und der Zähler bei einer Signalsituation am Bus, die nicht eintreten kann, sofern eine Kurzschlußsituation am Bus vorliegt, zurückgesetzt wird, wobei ferner ein Grenzwert für den Zähler vorgebbar ist, wobei der Grenzwert bei normalen Datenübertragungen nicht erreicht wird und wobei der Zähler den Grenzwert nur im Falle einer Kurzschlußsituation erreicht oder überschreitet.

Der Vorteil der Erfindung besteht darin, daß der Kurzschluß nicht physikalisch, so wie z.B. weiter oben für die Ausgangsseite von Peripheriebaugruppen beschrieben, sondern durch Auswertung der über die Zeit betrachteten jeweiligen logischen Zustände des Busses erkannt wird.

Weitere Merkmale, Vorteile und Anwendungsmöglichkeiten der Erfindung ergeben sich aus der nachfolgenden Beschreibung eines Ausführungsbeispiels, anhand der Figuren und der Figuren selbst. Dabei bilden alle beschriebenen und/oder bildlich dargestellten Merkmale für sich oder in beliebiger Kombination den Gegenstand der vorliegenden Erfindung.

Bei vielen heute gebräuchlichen Feldbussystemen ist der Ruhezustand des Busses logisch 1. Dies trifft insbesondere auf den sogenannten Profibus, insbesondere Profibus DP, zu. Ein Kurzschluß auf dem Bus bewirkt, daß eine Auswertung des Bussignals logisch Null ergibt. Der Zustand logisch Null ist also grundsätzlich ein Indiz für einen potentiellen Kurzschluß; allerdings tritt der Zustand logisch Null selbstverständlich auch während der Datenübertragung über den Bus auf. Daher ist es erfindungsgemäß vorgesehen, die Zeitdauer des Zustandes logisch Null auf dem Bus zu überwachen. Wenn diese Zeitdauer größer als die maximale Nullzeit ist - wobei die maximale Nullzeit soll im folgenden als die Zeit verstanden wird, während derer bei normaler Datenübertragung auf dem Bus sich der Zustand logisch Null einstellt - gilt dies als Indiz für einen Kurzschluß. Die maximale Nullzeit ist beim Profibus DP z.B. die Dauer der Übertragung von 10 Bit, wobei das Startbit den Zustand logisch Null hat, die acht auf das Startbit folgenden Datenbits den Zustand logisch Null haben können und bei acht aufeinanderfolgenden Datenbits mit dem Zustand logisch Null auch das sich an die Datenbits anschließende Paritybit den Zustand logisch Null hat, so daß sich insgesamt 10 Bit mit dem Zustand logisch Null ergeben können. Das sich an diese Übertragung anschließende Stopbit hat wieder den Zustand logisch 1. Eine Nullzeit größer als die für die Übertragung von 10 Bit zu veranschlagende Zeitspanne kann also als Indiz für einen am Bus bestehenden Kurzschluß gewertet werden. Um eventuelle Fehler bei der Datenübertragung nicht als Kurzschluß auszuwerten, wird im praktischen Einsatz die Nullzeit größer als die Übertragungszeit für 10 Bit gesetzt, z.B. auf die Übertragungszeit für 15 Bit.

Im Ausführungsbeispiel ist das Mittel zur Kurzschlußerkennung mit der oben beschriebenen Wirkungsweise in einem programmierbaren Logikbaustein realisiert. Selbstverständlich kann die gleiche Funktionalität auch mit einem Mikroprozessor oder Mikrocontroller realisiert werden.

Zur Kurzschlußerkennung ist dabei vorgesehen, daß mit dem Flankenwechsel beim Übergang vom Ruhestatus des Busses (logisch 1) zum Startbit (logisch Null) ein Timer oder Zähler des programmierbaren Logikbausteines gestartet wird. Selbstverständlich kann auch ein externer Zähler, also ein nicht in den FPGA integrierter Zähler, zur Anwendung kommen oder z.B. ein softwaremäßig realisierter Zähler oder ähnliches. Der mit dem Flankenwechsel beim Übergang vom Ruhezustand in den Sendezustand gestartete Zähler wird zyklisch inkrementiert und unmittelbar wieder zurückgesetzt, wenn auf dem Bus der Zustand logisch 1 erkannt wird. Wenn der Zähler nicht zurückgesetzt wird, also während einer bestimmten Zeit nach dem Flankenwechsel von logisch 1 auf logisch Null nicht erneut der Zustand logisch 1 erkannt wird, erreicht der Zähler nach Verstreichen einer bestimmten Zeitspanne einen vorgebbaren Grenzwert, der der maximalen Nullzeit entspricht. Wird dieser Grenzwert erreicht oder überschritten, ist ein Kurzschlußzustand auf dem Bus erkannt. Der Grenzwert für den Zähler, bei dem also auf Kurzschluß erkannt wird, ergibt sich aus der Multiplikation derjenigen Zeitdauer, die für die Übertragung eines einzelnen Bits erforderlich ist, was sich unmittelbar aus der über den Bus gefahrenen Baudrate ergibt, mit der Anzahl der Bits, die aufeinanderfolgend logisch Null sein können (zuzüglich einiger weiterer Bits, die hier aus Toleranzgründen berücksichtigt werden). Im vorliegenden Beispiel - wie bereits weiter oben genannt - also 15 Bit multipliziert mit der zur Übertragung eines einzelnen Bits erforderlichen Zeitspanne. Zur Ermittlung der Baudrate werden bereits bekannte Mittel zur Ermittlung der Baudrate verwendet, wie sie z.B. bei dezentralen Peripheriebaugruppen der Siemens Aktiengesellschaft Verwendung finden. Die Ermittlung der Baudrate erfolgt, indem der jeweilige Busteilnehmer den Busverkehr mithört und zunächst von der maximal möglichen Baudrate ausgeht und mit dieser Baudrate den Busverkehr zu interpretieren versucht, d.h. also eine logische Auswertung der über den Bus übertragenen Daten vornimmt. Ergibt sich bei dieser damit vorselektierten Baudrate keine sinnvolle Interpretation für die empfangenen Daten, wird die nächstniedrige Baudrate gewählt, so lange, bis die tatsächliche auf dem Bus verwendete Baudrate erkannt wird.

Liegt bereits eine Kurzschlußsituation vor, wird mithin auf dem Bus der Zustand logisch Null gelesen, kann die Baudratenermittlung keine Baudrate ermitteln, so daß folglich auch für das Mittel zur Kurzschlußerkennung, im vorliegenden Fall den FPGA, keine gültige Baudrate vorliegt. In diesem Fall geht das Mittel zur Kurzschlußerkennung im Gegensatz zu dem Mittel zur Baudratenerkennung von der minimal möglichen Baudrate aus, da dies bei der Multiplikation einer Bitzeit mit der Anzahl der theoretisch auf Null gesetzten Bits zu der zeitlich längsten Nulldauer führt.

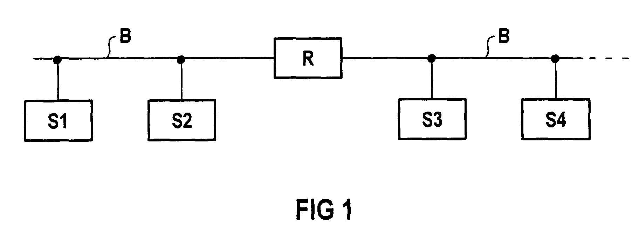

FIG 1 zeigt eine schematische Darstellung eines Feldbussystems mit dem Bus B und den an den Bus angeschlossenen Kommunikationsteilnehmern S1, S2,S3 und S4, wobei die beiden Segmente B des Bussystems B durch einen Repeater R verbunden sind, der eine Auffrischung der über den Bus B übertragenen Signale bewirkt und somit den Anschluß weiterer Teilnehmer S3, S4 hinter einer vorangegangenen Gruppe von Teilnehmern S1, S2 an das Bussystem B ermöglicht.
FIG 2 zeigt die sich gegebenenfalls am Bus B einstellenden Signalzustände abgetragen über der Zeit t.

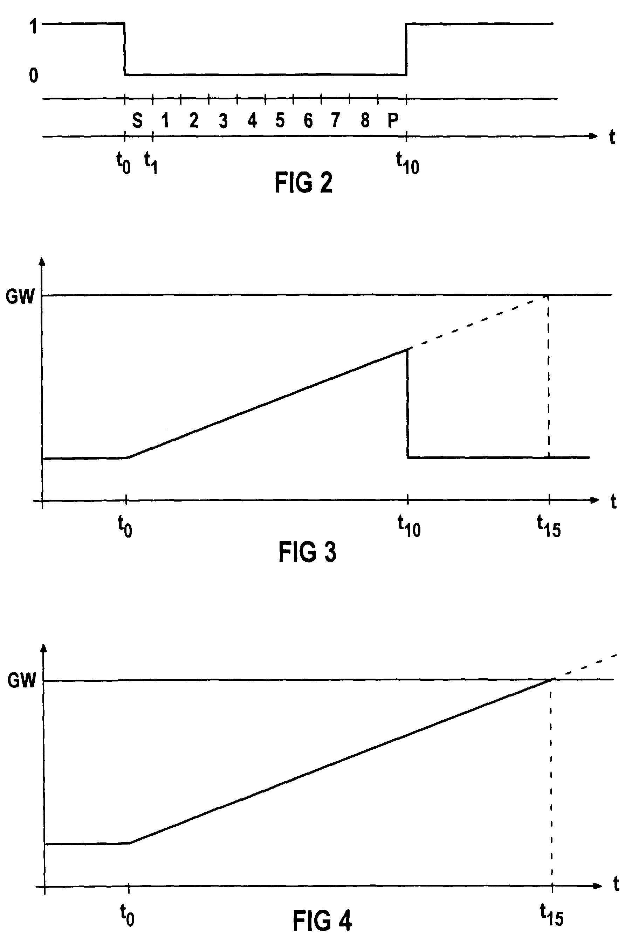

Dabei erfolgt ausgehend vom Ruhezustand, der durch einen Signalpegel logisch 1 gekennzeichnet ist, zu einem bestimmten Zeitpunkt t₀ ein Übergang von logisch 1 zu logisch Null, womit der Beginn einer Übertragung angezeigt wird und wobei der Signalzustand während der Dauer einer Bitzeit als Startbit S auf dem Zustand logisch Null gehalten wird. Danach folgen acht Datenbits, die gemäß FIG 2 sämtlich den Zustand logisch Null innehaben. In diesem Fall hat auch das Paritybit P den Zustand logisch Null. Das Ende der Datenübertragung wird durch einen Übergang von logisch Null nach logisch 1 gekennzeichnet. Danach befindet sich der Bus wieder im Ruhezustand.

Ein Bitzeit entspricht dem Zeitabschnitt t₁. Die gesamte Übertragung der 10 Bits, 8 Datenbits einschließlich Stop- und Paritybit, benötigt das Zehnfache einer Bitzeit und ist zum Zeitpunkt t₁₀ beendet.

In FIG 3 ist der Wert des zur Kurzschlußerkennung vorgesehenen Zählers über der Zeit t dargestellt. Eingezeichnet ist ferner ein Grenzwert GW, den der Wert des Zählers bei einer Bitzeit von 15 Bit, also zum Zeitpunkt t₁₅, um im Rahmen der bereits verwendeten exemplarischen Zahlenwerte zu bleiben, erreichen würde. Der Zähler wird, wie aus FIG 3 ersichtlich, beim Übergang von logisch 1 nach logisch Null nach dem Ruhezustand, also zum Zeitpunkt t₀, gestartet und wieder zurückgesetzt, sobald ein Übergang von logisch Null nach logisch 1 erkannt wird, in diesem Falle also erst am Ende der Datenübertragung und beim erneuten Übergang des Busses in den Ruhezustand zum Zeitpunkt t₁₀. Wäre eines der Datenbits bereits ein Bit mit dem Zustand logisch 1 gewesen, wäre der Zähler entsprechend früher zurückgesetzt worden. Da der Wert des Zählers den Grenzwert GW weder erreicht noch überschritten hat, liegt bei den exemplarisch dargestellten Verhältnissen am Bus keine Situation vor, die als Kurzschluß auszuwerten wäre.

Der gegenteilige Fall ist in FIG 4 dargestellt. Analog zu FIG 3 wird der Zähler wieder beim Übergang von logisch 1 nach logisch Null am Ende des Ruhezustandes des Busses zum Zeitpunkt t₀ gestartet. Diesmal sei jedoch eine Kurzschlußsituation am Bus angenommen, was dazu führt, daß der Signalzustand am Bus ständig logisch Null ist und mithin der Zähler auch nicht zurückgesetzt wird. Dies führt dazu, daß der Wert des Zählers irgendwann den Grenzwert GW erreicht und schließlich überschreitet, wobei mit dem Erreichen oder Überschreiten des Grenzwertes GW die Kurzschlußsituation als erkannt gilt und damit das Bussegment, auf dem die Kurzschlußsituation vorliegt, abgetrennt wird. Das Abtrennen eines Bussegmentes mit Kurzschlußsituation erfolgt z.B., indem die elektrisch leitenden Verbindungen z.B. durch einen elektronischen oder elektromechanischen Schalter, der durch eine dafür vorgesehene Schaltung ansteuerbar ist, aufgetrennt werden.

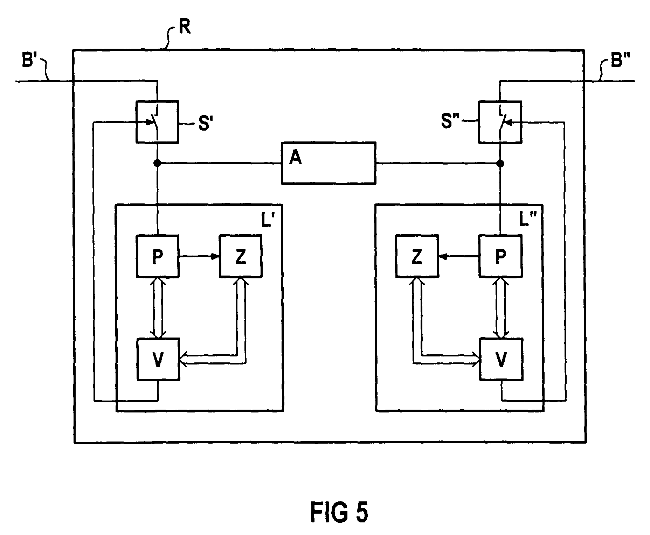

Die Schaltung zur Abtrennung des fehlerhaften Bussegmentes bewirkt das Abtrennen des fehlerhaften Bussegmentes, sobald der Wert des Zählers den Grenzwert erreicht oder überschreitet. Schematisch ist diese Schaltung in FIG 5 für die zwei Bussegmente B', B'' verbindenden Repeater R dargestellt. Busseitig ist jeweils ein Schaltelement S', S'' vorgesehen, mit dem der Bus auftrennbar ist, wobei die Schaltelemente S', S'' im Normalbetrieb geschlossen sind, so daß die Daten den Repeater R passieren und damit insbesondere an die Auswerteschaltung L zur Erkennung der Kurzschlußsituation sowie auch an eine Logik K zur Interpretation des über den Bus erfolgenden Datenverkehrs gelangen. Die Logik P übernimmt das Auffrischen und Verstärken der über den Bus übertragenen Daten. Dieses geschieht in an sich bekannter Weise und wird, da es nicht Gegenstand der vorliegenden Erfindung ist, hier auch nicht weiter untersucht.

Die Logik L' auf der dem Bussegment B' bzw. die Logik L'' auf der dem Bussegment B'' zugewandten Seite umfaßt jeweils zumindest Mittel P zur Erkennung des Signalpegels auf dem Bus, einen Zähler Z und einen Vergleicher V. Bei einem Pegelwechsel von logisch 1 nach logisch Null nach einem Ruhezustand am Bus bewirkt das Mittel P den Start des Zählers Z. Wird, sobald der Zähler Z gestartet ist, durch das Mittel P ein Übergang von logisch Null nach logisch 1 detektiert, bewirkt das Mittel P das Zurücksetzen des Zählers Z. Ist der Zähler Z gestartet, wird ferner der Vergleicher V aktiviert, der den jeweiligen Wert des Zählers Z mit einem dem Vergleicher V vorgebbaren Grenzwert GW vergleicht. Wird durch den Vergleicher V erkannt, daß der Wert des Zählers Z den vorgebbaren Grenzwert GW erreicht oder überschreitet, wird das jeweilige Schaltelement S', S'' angesteuert und ein Abtrennen des jeweiligen Bussegmentes B', B'' durch Öffnen des Schaltelementes S', S'' bewirkt.

Es sei nochmals darauf hingewiesen, daß die Darstellung gemäß FIG 5 lediglich eine schematische Darstellung ist; üblicherweise werden die Komponenten der Logik L', L'' softwaremäßig, z.B. als separate Unterprogramme, realisiert sein. Auch das in FIG 5 dargestellte Schaltelement S', S'' braucht in einer konkreten Realisierung nicht notwendigerweise als Schaltelement ausgeführt zu sein. So ist es z.B. denkbar, daß die an den Bus angeschlossenen Stationen S1, S2 z.B. mittels Optokoppler vom Bus ohnehin galvanisch getrennt sind, so daß bei einer erkannten Kurzschlußsituation einfach eine weitere Auswertung der Busdaten unterbleibt.

## Patentansprüche

1. Repeater (R) zur Verbindung eines ersten Bussegmentes eines Bussystems, insbesondere eines Feldbussystems, mit mindestens einem weiteren Segment dieses Bussystems, wobei der Repeater Mittel zur Erkennung des Signalzustandes am Bussystem, einen Zähler und Mittel zur Abtrennung angeschlossener Bussegmente aufweist, wobei der Zähler beim Beginn einer Datenübertragung gestartet wird und der Zähler bei einer Signalsituation am Bus, die nicht eintreten kann, sofern eine Kurzschlußsituation am Bus vorliegt, zurückgesetzt wird, wobei ferner ein Grenzwert (GW) für den Zähler vorgebbar ist, wobei der Grenzwert (GW) bei normalen Datenübertragungen nicht erreicht wird und wobei der Zähler den Grenzwert (GW) nur im Falle einer Kurzschlußsituation erreicht oder überschreitet.
